# EUROPEAN PATENT SPECIFICATION

(11) **EP 2 128 006 B1**
(45) Date of publication and mention of the grant of the patent: **24.04.2019**
(21) Application number: 08720752.8
(22) Date of filing: 19.02.2008
(51) Int. Cl.: B62J 9/00, B62J 35/00

(54) **STRADDLE-RIDING TYPE VEHICLE**
GRÄTSCHSITZFAHRZEUG
VÉHICULE DE TYPE À CONDUITE À CALIFOURCHON

(30) Priority: 22.02.2007 JP 2007042802
(43) Date of publication of application: 02.12.2009
(73) Proprietor: Yamaha Hatsudoki Kabushiki Kaisha, Iwata-shi, Shizuoka 438-8501 (JP)
(72) Inventor: OHIRA, Masaru, Shizuoka-ken 438-8501 (JP)
(74) Representative: Grünecker Patent- und Rechtsanwälte PartG mbB
(86) International application number: PCT/JP2008/052777
(87) International publication number: WO 2008/102781

(56) References cited:
- EP-A1- 0 404 195
- EP-A1- 1 384 873
- EP-A2- 0 303 408
- FR-A1- 2 736 611
- JP-A- 09 150 773
- JP-A- 60 154 964
- JP-A- 62 034 870
- JP-A- 62 155 181
- JP-A- 2004 268 840
- JP-A- 2006 315 503
- US-A- 4 666 009
- US-A- 4 726 439
- US-A- 5 433 286

## Description

The present invention relates to a straddle-type vehicle according to the preamble of independent claim 1. Such a vehicle can be taken from the prior art document FR 2736611 A1.

Straddle-type vehicles, like scooter motorcycles that have a footboard (a footrest member) on which a rider can place both his/her feet or under bone motorcycles that have a vehicle body frame that is disposed at a comparatively low position as compared to standard motorcycles, often use a structure in which a helmet storage compartment is provided beneath a seat on which the rider sits (for example, refer to Patent Document 1) .

### [Patent Document 1] JP-A-5-185972 (Page 3, FIG. 1)

However, in recent year, as a result of demands related to improvement in the ease of cable routing and design, there has been a tendency in motorcycles like scooter motorcycles and under bone motorcycles for the vehicle width of the motorcycle, and particularly the vehicle width in the vicinity of the seat, to become narrower. In addition, demands related to improvements in ride safety, ride comfort and design of motorcycles have led to a tendency to enlarge the outer diameters of wheels.

The above-described motorcycle has the following problems in terms of addressing these demands. More particularly, because the helmet storage compartment is provided beneath the seat, it is difficult to reduce the vehicle width in the vicinity of the seat. Moreover, because the outer diameters of the vehicle wheels are larger, it is difficult to ensure provision of an adequate helmet storage compartment while making the vehicle width of the motorcycle narrower.

The vehicle according to the prior art document EP 1 384 873 A1 is provided with a rear frame which is constituted by a pair of frame tubes that are spaced from each other in vehicle width direction. Said frame tubes support respective corner portions of the helmet storage compartment. In order to provide a smooth connection between the frame tubes and the helmet storage compartment, the respective compartment box is provided with arc-shaped corner portions which follow the shape of the tube frame member. The outermost surface section of said tube frame members extends over the outermost surface of the compartment box in width direction of the vehicle as well as in downward direction towards the rear wheel. The compartment box receives the helmet between said tube members or above same.

The further prior art document EP 0 303 408 A2 discloses a central frame member having a rectangular cross-section and being arranged directly above the rear wheel, wherein the compartment box is directly arranged above and in front direction of said frame member. In order to receive the upper surface of said frame member, especially the bent section of said frame part, the compartment box is provided with a corresponding recess. The compartment box provides a small arc-shaped recess adapted to the bent portion of the frame member which slightly projects inside the helmet opening when a helmet is stored in the respective compartment box.

It is an object of the present invention to provide a straddle-type vehicle as indicated above which is provided with a compact structure while ensuring provision of an adequate helmet storage compartment.

According to the present invention, said objective is solved by a straddle-type vehicle having the features of independent claim 1. Preferred embodiments are laid down in the dependent claims.

Accordingly, it is provided a straddle-type vehicle which is supported by the following aspects. First, a first aspect of the invention provides a straddle-type vehicle (a motorcycle 10) including a vehicle body frame (a vehicle body frame 30) that forms a frame of a vehicle body (a vehicle body 10A) and a helmet storage compartment (a helmet storage compartment 100) capable of storing a helmet (a helmet HL). A first protrusion (a protrusion 121) that protrudes upwards is provided in a bottom surface (a bottom surface 110) of the helmet storage compartment so as to form a first recess (a recess 123) that opens toward the bottom of the straddle-type vehicle. At least a portion of the vehicle body frame is disposed within the first recess.

According to the first aspect, at least the portion of the vehicle body frame is disposed within the first recess formed in the bottom surface of the helmet storage compartment by the first protrusion in the helmet storage compartment. As a result, interference of the vehicle body frame and the helmet storage compartment is avoided and it is possible to ensure that the helmet storage compartment has sufficient capacity to store the helmet.

Thus, according to the straddle-type vehicle of this aspect, the vehicle width of the straddle-type vehicle and in particular the vehicle width in the vicinity of a seat can be narrowed while ensuring provision of an adequate helmet storage compartment.

A second aspect is configured such that, in the first aspect, the vehicle body frame (the vehicle body frame 30) has an offset member (a rear side frame section 32r) that is provided at a position that is offset from a vehicle body center line (a vehicle body center line CL) of the straddle-type vehicle (the motorcycle 10) in the vehicle width direction. The offset member is inserted in to the first recess from below the helmet storage compartment.

A third aspect is configured such that, in the first aspect, the straddle-type vehicle (the motorcycle 10) further includes a vehicle wheel (a rear wheel 90). The helmet storage compartment (the helmet storage compartment 100) is provided above the vehicle wheel, and a second protrusion (a protrusion 122) that protrudes upwards is formed in the bottom surface of the helmet storage compartment at a position that faces the vehicle wheel. The second protrusion is provided such that a second recess (a recess 124) is formed that opens towards the bottom of the straddle-type vehicle.

A fourth aspect is configured such that, in the first aspect, the helmet storage compartment (the helmet storage compartment 100) has a front end section (a front end section 100a) and a rear end section (a rear end section 100b), and the front end section and the rear end section are supported by the vehicle body.

A fifth aspect is configured such that, in the fourth aspect, the helmet storage compartment (the helmet storage compartment 100) is supported by the vehicle body frame.

A sixth aspect is configured such that, in the fourth aspect, the helmet storage compartment (the helmet storage compartment 100) is supported by the vehicle body frame via a support member (a rear stay 34 and a tank stay 39) that extends in the vehicle width direction from the vehicle body frame toward a vehicle body inner side.

According to this straddle-type vehicle, the helmet storage compartment 100 is reliably supported at the rear end section 100b of the helmet storage compartment 100 by the rear side frame section 32r that is located at the position offset from the vehicle body center line CL.

In addition, the helmet storage compartment does not require support structure at side end sections of the helmet storage compartment since the helmet storage compartment is supported by the vehicle body frame at the front end section and the rear end section.

A seventh aspect is configured such that, in the third aspect, the straddle-type vehicle further includes a vehicle wheel support member (a rear end section 60a) that rotatably supports the vehicle wheel, and a shock absorption mechanism (a rear cushion unit 80), linked to the vehicle wheel support member and the offset member, that absorbs shock received by the vehicle wheel. The shock absorption mechanism is connected to a side section (an outer side surface 32out) of the offset member at the outside in the vehicle width direction.

An eighth aspect includes, in the first aspect, a seat (a seat 40) on which a rider sits; an engine unit (an engine unit 60) that generates driving force that is transmitted to a vehicle wheel (the rear wheel 90); and a fuel tank (a fuel tank 70) that stores fuel that is supplied to the engine unit. The fuel tank is provided beneath the seat, and the helmet storage compartment is positioned to the rear of the fuel tank.

According to this straddle-type vehicle, the space to the rear of the fuel tank provided beneath the seat can be actively used as space for the helmet storage compartment. As a result, it is possible to ensure provision of an adequate helmet storage compartment even in the case that the vehicle width of the straddle-type vehicle, and in particular the vehicle width in the vicinity of the seat, is narrow.

A ninth aspect is configured such that, in the eighth aspect, the helmet storage compartment is provided further to the front than a wheel axle (a wheel axle 90a) of the vehicle wheel.

A tenth aspect includes, in the eighth aspect, a suspension member (a suspension member 36) that suspends the engine unit. The suspension member is provided beneath the fuel tank.

An eleventh aspect includes, in the eighth, a shock absorption mechanism (a rear cushion unit 80), extending upwards from a rear end section of the engine unit, that absorbs shock received by the vehicle wheel. The helmet storage compartment is provided further to the front than the shock absorption mechanism.

A twelfth aspect is configured such that,
in the eighth aspect of the invention, the fuel tank has a seat support member (a seat support bracket 71, a shaft 72) that turnably supports the seat.

A thirteenth aspect is configured such that, in the twelfth aspect, the seat support member has a turning shaft (a shaft 72) that extends in the vehicle width direction, and that supports a front section (a front section 40a) of the seat.

### Brief Description of the Drawings

FIG. 1 is a left side view of a motorcycle according to an embodiment of the invention.
FIG. 2 is a left side view of a section of a vehicle body that forms the motorcycle according to the embodiment of the invention.
FIG. 3 is a perspective view of a helmet storage compartment and a periphery of the helmet storage compartment according to the embodiment of the invention, taken diagonally from the rear right side.
FIG. 4 is a perspective view of the helmet storage compartment and the periphery of the helmet storage compartment according to the embodiment of the invention, taken diagonally from below.
FIG. 5 is a cross sectional view along line F5-F5 shown in FIG. 1.
FIG. 6 is a cross sectional view of a helmet storage compartment according to a modified example of the embodiment of the invention.
FIG. 7 is a cross sectional view of a helmet storage compartment according to a modified example of the embodiment of the invention.

Hereinafter, an embodiment of a straddle-type vehicle according to the invention will be described with reference to the drawings. Note that, in the following drawings, structural members that are the same or similar are denoted with the same or similar reference numerals. Also note that the figures are schematic, and thus the reader should be aware that the relative scale of dimensions and the like may be different to the real object.

Therefore, specific dimensions and the like can be determined based on reference to the following description. In addition, it will be readily apparent that the various figures include sections in which the relationship and scale of respective dimensions etc. are different.

### (Overall outline of structure of the straddle-type vehicle)

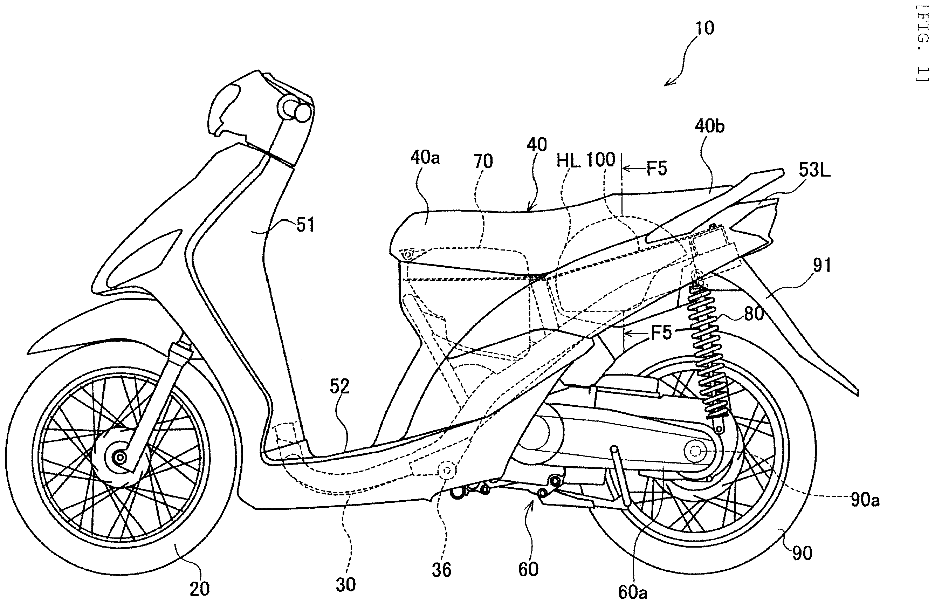

FIG. 1 is a left side view of a motorcycle 10 which is a straddle-type vehicle according to the embodiment. As can be seen from FIG. 1, the motorcycle 10 is a scooter motorcycle that allows the rider to ride with both legs placed together.

The motorcycle 10 has a front wheel 20 and a rear wheel 90. Driving force generated by an engine unit 60 drives the rear wheel 90.

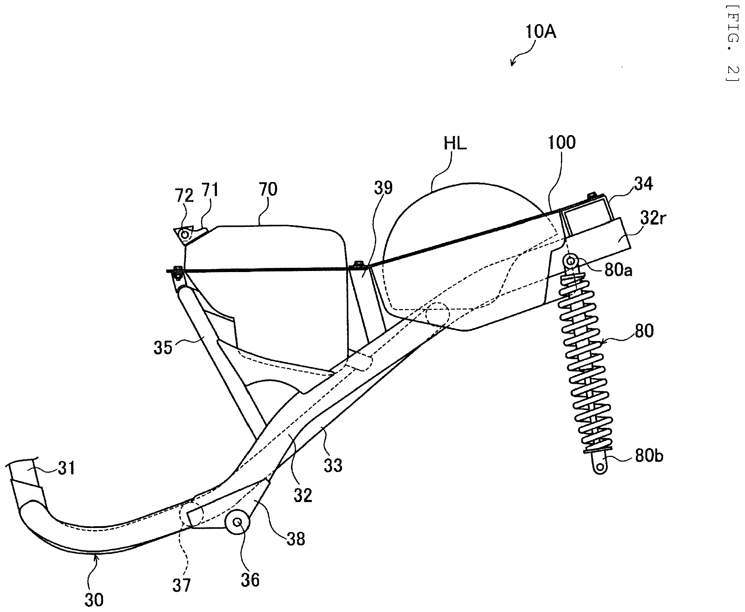

The motorcycle 10 has a vehicle body frame 30 that forms the frame of a vehicle body 10A (not shown in FIG. 1, but refer to FIG. 2). A suspension member 36 is provided in the vehicle body frame 30 and suspends the engine unit 60 such that it can swing generally upward and downward.

Moreover, the motorcycle 10 is provided with a leg shield 51 that covers the vehicle body frame 30, a footboard 52, and a side cover 53L.

The vehicle body frame 30 forms the frame of a vehicle body 10A. The engine unit 60, a fuel tank 70, the rear wheel 90, a rear cushion unit 80, a rear fender 91 and a helmet storage compartment 100 and the like are attached to the vehicle body frame 30.

In other words, the vehicle body 10A includes the engine unit 60, the fuel tank 70, the rear wheel 90, the rear cushion unit 80, the rear fender 91 and the helmet storage compartment 100. A seat 40, the leg shield 51, the footboard 52 and the side cover 53L are attached to the vehicle body 10A.

The leg shield 51 is disposed to the front of the rider's legs. The rider places his/her feet on the footboard 52. In this embodiment, the footboard 52 forms a footrest member.

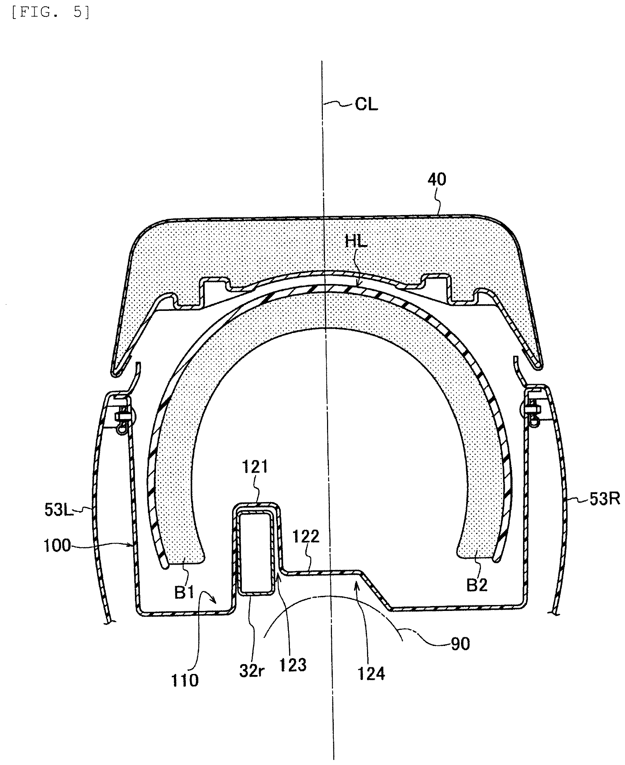

The side cover 53L is positioned on a left side section of the motorcycle 10. More particularly, the side cover 53L extends from below the seat 40 on which the rider sits to above the rear fender 91. Note that, a side cover 53R that has a shape that is generally symmetrical to the side cover 53L is provided on a right side section of the motorcycle 10 (not shown in FIG. 1, but refer to FIG. 5).

The fuel tank 70 that stores fuel that is supplied to the engine unit 60 is provided beneath the seat 40. The seat 40 is turnably supported by the fuel tank 70.

The engine unit 60 includes an engine body (not shown in the figures) and a transmission device (not shown in the figures) that transmits driving force generated by the engine body to the rear wheel 90. More particularly, the engine unit 60 generates driving force that is transmitted to the rear wheel 90.

The rear wheel 90, which is provided with a wheel axle 90a, is rotatably supported by a rear end section 60a of the engine unit 60. In this embodiment, the rear end section 60a of the engine unit 60 forms a wheel support member.

In addition, the rear cushion unit 80 is connected to the rear end section 60a of the engine unit 60. The rear cushion unit 80 extends upward from the rear end section 60a of the engine unit 60. The rear cushion unit 80 is formed by a coil spring and a damper, and absorbs shock received by the rear wheel 90.

The rear fender 91 is provided above the rear wheel 90. The rear fender 91 inhibits rain water or the like thrown up by the rear wheel 90 from flying around.

The helmet storage compartment 100 is provided beneath the seat 40 that is rotatably supported by the fuel tank 70. Moreover, the helmet storage compartment 100 is provided to the rear of the fuel tank 70. More particularly, in this embodiment, the helmet storage compartment 100 is provided above the rear wheel 90. The helmet storage compartment 100 can store a helmet HL. In this embodiment, the helmet HL is an open face helmet (a jet helmet).

### (Helmet storage compartment)

Next, the positional arrangement and the shape of the helmet storage compartment 100 will be explained.

### (1) Position of the helmet storage compartment

FIG. 2 is a left side view of a section of the vehicle body 10A that forms the motorcycle 10. As can be seen from FIG. 2, the vehicle body frame 30 includes a down tube 31, a left side sub frame 32, and a right side sub frame 33. A front end of the left side sub frame 32 and a front end of the right side sub frame 33 are joined to the down tube 31.

The left side sub frame 32 extends toward the rear of the motorcycle 10. The right side sub frame 33 is joined to the left side sub frame 32. More particularly, the right side sub frame 33 extends toward the rear in line with the left side sub frame 32 at the right hand side of the left side sub frame 32. A rear end of the right side sub frame 33 is joined to the left side sub frame 32.

The left side sub frame 32 also extends further to the rear from a joining portion where the left side sub frame 32 joins the rear end of the right side sub frame 33. In this embodiment, the section of the left side sub frame 32 located further to the rear than the joining portion of the left side sub frame 32 and the rear end of the right side sub frame 33 is shown in the figure as a rear side frame section 32r. A rear stay 34 that extends in the vehicle width direction is joined to the rear side frame section 32r.

A cross tube 37 that joins the left side sub frame 32 and the right side sub frame 33 is provided to the front of the suspension member 36 and extends in the vehicle width direction. In addition, a gusset 38 that reinforces the suspension member 36 is provided around the periphery of the suspension member 36.

The helmet storage compartment 100 is attached to the rear stay 34 and a tank stay 39. The helmet HL is stored in the helmet storage compartment 100 with the head covering side upward, and front side facing the back of the motorcycle 10.

In addition, the vehicle body frame 30 includes a tank support sub frame 35 that supports the fuel tank 70. The tank support sub frame 35 is joined to the left side sub frame 32 and the right side sub frame 33. The tank support sub frame 35 is provided to the front of the fuel tank 70, and supports the fuel tank 70. In addition, the tank stay 39 is provided to the rear of the fuel tank 70. The fuel tank 70 is attached to the tank stay 39.

The fuel tank 70 includes a seat support bracket 71 that turnably supports the seat 40 (refer to FIG. 1). More particularly, the seat support bracket 71 turnably supports a front section 40a of the seat 40 (refer to FIG. 1) . A shaft 72 is inserted through the seat support bracket 71. In this embodiment, the shaft 72 forms a turning shaft that extends in the vehicle width direction. Moreover, in this embodiment, the seat support bracket 71 and the shaft 72 form a seat support member.

A seat lock bar (not shown in the figures) is provided at a rear section 40b of the seat 40 (refer to FIG. 1). The seat lock bar engages with a seat lock hook (not shown in the figures) provided inside the rear stay 34.

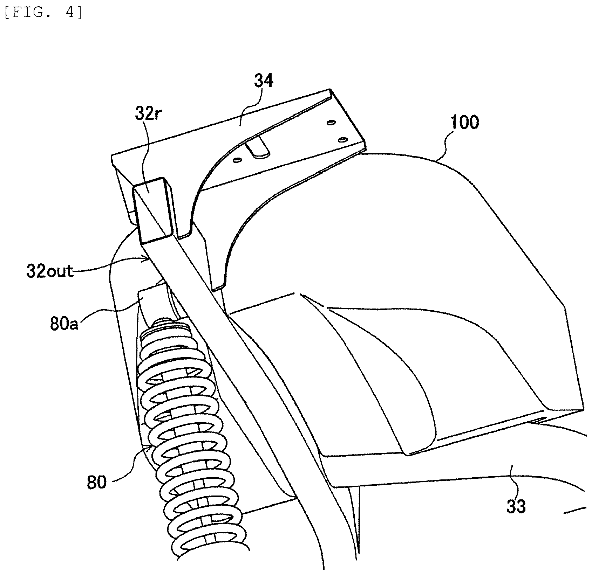

The rear cushion unit 80 is connected to the rear side frame section 32r. More particularly, an upper end section 80a of the rear cushion unit 80 is connected to the rear side frame section 32r, and more particularly is connected to an outer side surface 32out of the rear side frame section 32r (not shown in FIG. 2, but refer to FIG. 4). In addition, a lower end section 80b of the rear cushion unit 80 is connected to the rear end section 60a of the engine unit 60 (refer to FIG. 1) as described above.

### (2) Shape of the helmet storage compartment

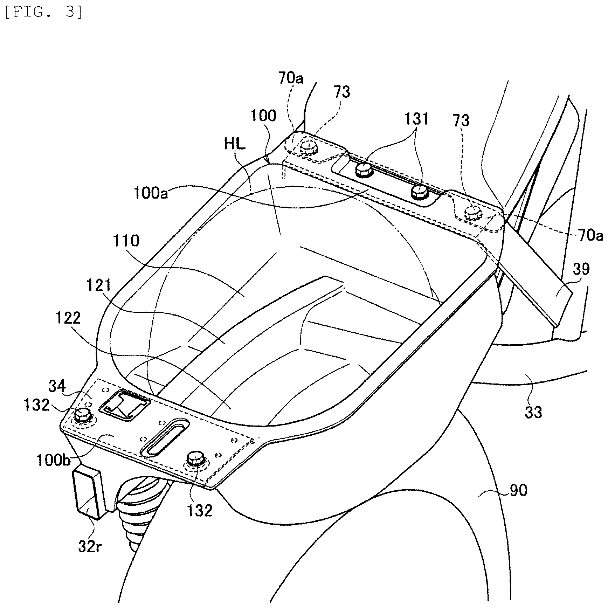

FIG. 3 is a perspective view of the helmet storage compartment 100 and a periphery of the helmet storage compartment 100 taken diagonally from the rear right side. FIG. 4 is a perspective view of the helmet storage compartment 100 and the periphery of the helmet storage compartment 100 taken diagonally from below. Note that, the rear fender 91 is omitted from FIG. 3 and thus is not shown in the figure. Also, the rear wheel 90 and the rear fender 91 are omitted from FIG. 4 and thus are not shown in the figure. FIG. 5 is a cross sectional view along line F5-F5 shown in FIG. 1.

Referring to FIG. 3 to FIG. 5, the helmet storage compartment 100 has a box shape with an open upper section. As described above, the helmet storage compartment 100 is attached to the rear stay 34 and the tank stay 39.

As shown in FIG. 4, the rear side frame section 32r is joined to the rear stay 34 that is disposed to extend in the vehicle width direction. More particularly, the rear stay 34 extends in the vehicle width direction from the rear side frame section 32r toward the vehicle body inner side. In this embodiment, the rear stay 34 forms a support member that extends in the vehicle width direction from the vehicle body frame toward the vehicle body inner side.

A protrusion 121 is formed in a bottom surface 110 of the helmet storage compartment 100 and protrudes upwards so as to form a recess 123 that opens toward the bottom of the motorcycle 10. In this embodiment, the recess 123 forms a first recess. In addition, the protrusion 121 forms a first protrusion.

A protrusion 122 is formed in the bottom surface 110 of the helmet storage compartment 100 at a position that faces the rear wheel 90, and protrudes upwards so as to form a recess 124 that opens toward the bottom of the motorcycle 10. In this embodiment, the recess 124 forms a second recess. In addition, the protrusion 122 forms a second protrusion.

In this embodiment, the protrusion 122 is adjacent to the protrusion 121.

Furthermore, the depth of a front section of the helmet storage compartment 100 is deeper than the depth of a rear section of the helmet storage compartment 100.

The rear side frame section 32r inserts in to the protrusion 121 from below the helmet storage compartment 100. In other words, the rear side frame section 32r is disposed inside the recess 123. More particularly, the protrusion 121 has the same shape as the rear side frame section 32r positioned beneath the helmet storage compartment 100.

The protrusion 122 is formed in the bottom surface 110 of the helmet storage compartment 100 at a position that faces the rear fender 91 provided on the rear wheel 90, and more particularly provided at the diameter direction outer side of the rear wheel 90.

The rear side frame section 32r is provided at a position that is offset from a vehicle body center line CL (refer to FIG. 5) of the motorcycle 10 in the vehicle width direction. In this embodiment, the rear side frame section 32r forms an offset member. In other words, the protrusion 121 is formed at a position that is offset from the vehicle body center line CL. More specifically, the protrusion 121 is provided at a position between a side end section B1 of the helmet HL, and a side end section B2 on the opposite side to the side end section B1.

The fuel tank 70 and the helmet storage compartment 100 are attached to the tank stay 39. More particularly, a front end section 100a of the helmet storage compartment 100 is attached to the tank stay 39 using bolts 131. In addition, a rear end section 70a of the fuel tank 70 is provided at the lower side of the front end section 100a of the helmet storage compartment 100. The rear end section 70a of the fuel tank 70 and the front end section 100a of the helmet storage compartment 100 are attached to the tank stay 39 using bolts 73.

The rear end section 100b of the helmet storage compartment 100 is attached to the rear stay 34 using bolts 132.

An upper end section 80a of the rear cushion unit 80 is connected to the outer side surface 32out that is the side portion of the rear side frame section 32r at the outside in the vehicle width direction.

Referring to FIG. 5, the side cover 53L is attached to an outer left side surface of the helmet storage compartment 100. In addition, the side cover 53R is attached to an outer right side surface of the helmet storage compartment 100.

### (Operation & Advantages)

According to the motorcycle 10, the space to the rear of the fuel tank 70 provided beneath the seat 40 can be effectively utilized for the helmet storage compartment 100. As a result, it is possible to ensure provision of an adequate helmet storage compartment 100 even when the vehicle width of the motorcycle 10, and in particular the vehicle width in the vicinity of the seat 40, is narrowed.

In this embodiment, the helmet storage compartment 100 is provided to the front than the wheel axle 90a of the rear wheel 90. More particularly, the helmet storage compartment 100 that becomes comparatively heavier when the helmet HL is stored therein is provided closer to the center of gravity of the motorcycle 10. In addition, in this embodiment, the suspension member 36 is provided beneath the fuel tank 70. Thus, the fuel tank 70 and the engine unit 60 that is suspended by the suspension member 36, which are the components among the components of the motorcycle 10 with greater weight, can be provided in the vicinity of the center of gravity of the motorcycle 10. Accordingly, the stability of steering and the maneuverability of the motorcycle 10 are improved.

In this embodiment, the helmet storage compartment 100 is provided to the front than the rear cushion unit 80. Accordingly, interference of the rear cushion unit 80 and the helmet storage compartment 100 is avoided and sufficient capacity for storing the helmet HL in the helmet storage compartment 100 is ensured.

In this embodiment, the rear side frame section 32r is inserted in to the protrusion 121 from below the helmet storage compartment 100. In other words, the rear side frame section 32r is disposed inside the recess 123. In addition, the rear side frame section 32r is positioned in an offset manner with respect to the vehicle body center line CL.

As a result, interference of the rear side frame section 32r and the rear wheel 90 is avoided, and the helmet storage compartment 100 can be provided in the space behind the fuel tank 70, namely, the space above the rear wheel 90. More particularly, it is possible to provide the helmet storage compartment 100 even in the case that the rear wheel 90 has a large diameter.

In addition, in this embodiment, the upper end section 80a of the rear cushion unit 80 is connected to the outer side surface 32out that is the side portion of the rear side frame section 32r at the outside in the vehicle width direction. Thus, the protrusion 121 can be positioned between the side end section B1 and the side end section B2 of the helmet HL.

In this embodiment, the seat 40 is turnably supported by the seat support bracket 71 and the shaft 72. As a result, it is easy to stow and remove the helmet HL in/from the helmet storage compartment 100 provided beneath the seat 40.

In this embodiment, the rear stay 34 that is disposed to extend in the vehicle width direction is joined to the rear side frame section 32r. More particularly, the rear stay 34 extends in the vehicle width direction from the rear side frame section 32r toward the vehicle body inner side. Accordingly, the rear stay 34 is provided in an interposed manner with respect to the rear side frame section 32r provided at a position that is offset from the vehicle body center line CL, and can reliably support the rear end section 100b of the helmet storage compartment 100.

In this embodiment, the front end section 100a of the helmet storage compartment 100 is attached to the tank stay 39 using the bolts 131. In addition, the rear end section 70a of the fuel tank 70 is disposed beneath the front end section 100a of the helmet storage compartment 100, and is also attached to the tank stay 39 using the bolts 73. Moreover, the rear end section 100b of the helmet storage compartment 100 is attached to the rear stay 34 using the bolts 132.

In other words, the front end section 100a and the rear end section 100b of the helmet storage compartment 100 are supported by the vehicle body frame 30. Thus, it is not necessary to provide a support structure at the side end sections of the helmet storage compartment 100, for supporting the helmet storage compartment 100 using the vehicle body frame 30. As a result, the width of the motorcycle 10 in the vicinity of the seat 40 can be narrowed.

### (Other embodiments)

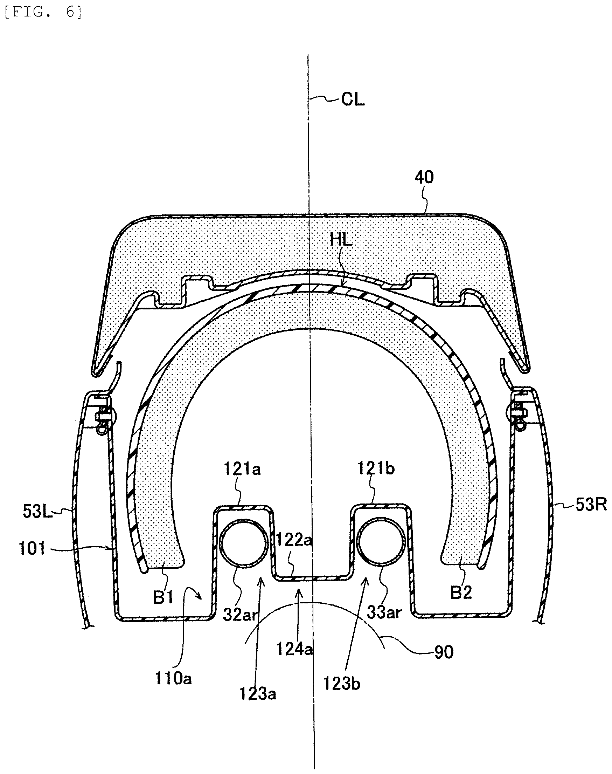

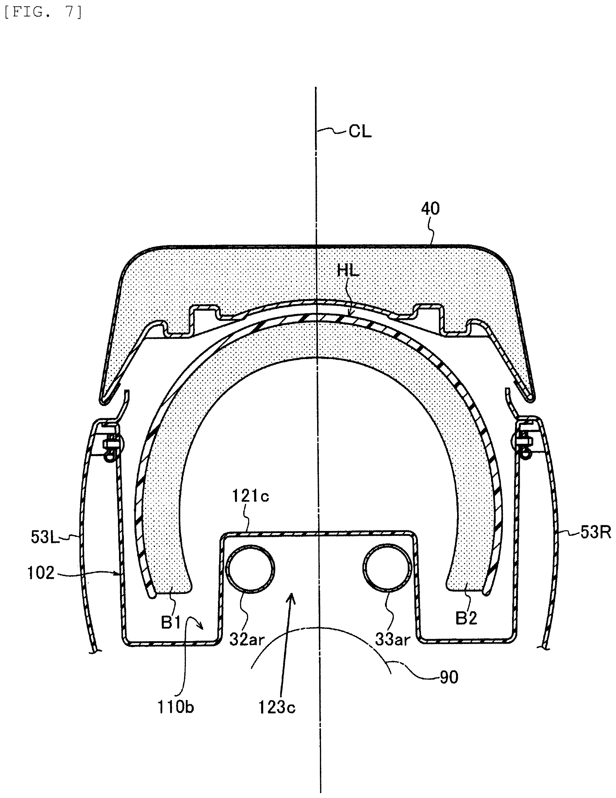

FIG. 6 and FIG. 7 are cross sectional views that show modified examples of the helmet storage compartment. FIG. 6 and FIG. 7 are cross sectional views along the line F5-F5 shown in FIG. 1.

### Howeve

### (1) First modified example

In FIG. 6, the sections of the left side sub frame 32 and the right side sub frame 33 that are positioned to the rear than the joining portion of the left side sub frame 32 and the rear end of the right side sub frame 33 are indicated as rear side frame sections 32ar, 33ar.

The rear side frame sections 32ar, 33ar are positioned generally symmetrically with respect to the vehicle body center line CL (refer to FIG. 6) of the motorcycle 10 in the vehicle width direction.

A protrusion 121a is formed in a bottom surface 110a of a helmet storage compartment 101 and protrudes upwards so as to form a recess 123a that opens toward the bottom of the motorcycle 10. In addition, a protrusion 121b is provided and protrudes upwards so as to form a recess 123b that opens toward the bottom of the motorcycle 10.

In this modified example, the recesses 123a, 123b form the first recess. In addition, the protrusions 121a, 121b form the first protrusion.

The rear side frame section 32ar is inserted in to the protrusion 121a from below the helmet storage compartment 101. In other words, the rear side frame section 32ar is disposed inside the recess 123a. More particularly, the protrusion 121a is formed with a shape that matches that of the rear side frame section 32ar positioned beneath the helmet storage compartment 101.

The rear side frame section 33ar is inserted in to the protrusion 121b from below the helmet storage compartment 101. In other words, the rear side frame section 33ar is disposed inside the recess 123b. More particularly, the protrusion 121b is formed with a shape that matches that of the rear side frame section 33ar positioned beneath the helmet storage compartment 101.

The protrusions 121a, 121b are positioned between the side end section B1 of the helmet HL and the side end section B2 on the opposite side to the side end section B1.

The protrusion 122a is formed in the bottom surface 110a of the helmet storage compartment 101 at a position that faces the rear wheel 90, and more particularly at a position that faces the rear fender 91 provided at the diameter direction outer side of the rear wheel 90. The protrusion 122a protrudes upwards so as to form a recess 124a that opens towards the bottom of the motorcycle 10.

In this modified example, the recess 124a forms the second recess. In addition, the protrusion 122a forms a second protrusion.

In the helmet storage compartment 101, the protrusions 121a and 121b are formed by forming portions of the protrusion 122a such that they protrude upwards further.

In this manner, according to the first modified example, interference of the rear side frame sections 32ar, 33ar and the rear wheel 90 is avoided, and the helmet storage compartment 101 can be provided in the space behind the fuel tank 70, namely, the space above the rear wheel 90. More particularly, it is possible to provide the helmet storage compartment 101 even in the case that the rear wheel 90 has a large diameter.

Note that, in the first modified example, the rear side frame sections 32ar, 33ar have a cross sectional shape that is generally circular. However, the cross sectional shape is not limited to being generally circular. For example, the cross sectional shape may be square, elliptical or the like.

### (2) Second modified example

In FIG. 7, the sections of the left side sub frame 32 and the right side sub frame 33 that are positioned to the rear than the joining portion of the left side sub frame 32 and the rear end of the right side sub frame 33 are indicated as the rear side frame sections 32ar, 33ar.

The rear side frame sections 32ar, 33ar are positioned generally symmetrically with respect to the vehicle body center line CL (refer to FIG. 7) of the motorcycle 10 in the vehicle width direction.

A protrusion 121c is formed in a bottom surface 110b of a helmet storage compartment 102 and protrudes upwards so as to form a recess 123c that opens toward the bottom of the motorcycle 10.

In this modified example, the recess 123c forms the first recess. In addition, the protrusion 121c forms the first protrusion.

The protrusion 121c is formed with a shape that covers both the rear side frame section 32ar and the rear side frame section 33ar positioned beneath the helmet storage compartment 102.

The rear side frame section 32ar and the rear side frame section 33ar are inserted in to the protrusion 121c from below the helmet storage compartment 102. In other words, the rear side frame section 32ar and the rear side frame section 33ar are disposed inside the recess 123c. More particularly, the protrusion 121c is formed with a shape that matches that of the rear side frame section 32ar and the rear side frame section 33ar positioned beneath the helmet storage compartment 102.

The protrusion 121c is positioned between the side end section B1 of the helmet HL and the side end section B2 on the opposite side to the side end section B1.

The protrusion 121c is formed in the bottom surface 110b of the helmet storage compartment 102 at a position that faces the rear wheel 90, and more particularly at a position that faces the rear fender 91 provided at the diameter direction outer side of the rear wheel 90. In other words, in the second modified example, the protrusion 121c forms the second protrusion.

In this manner, according to the second modified example, interference of the rear side frame sections 32ar, 33ar and the rear wheel 90 is avoided, and the helmet storage compartment 102 can be provided in the space behind the fuel tank 70, namely, the space above the rear wheel 90. More particularly, it is possible to provide the helmet storage compartment 102 even in the case that the rear wheel 90 has a large diameter.

Note that, in the second modified example, the rear side frame sections 32ar, 33ar have a cross sectional shape that is generally circular. However, the cross sectional shape is not limited to being generally circular. For example, the cross sectional shape may be square, elliptical or the like.

In the above-described embodiment, the helmet storage compartment 100 is supported by the vehicle body frame 30 via the support members like the rear stay 34 and the tank stay 39. However, the helmet storage compartment 100 may be supported directly by the vehicle body frame 30. Alternatively, the helmet storage compartment 100 may be supported by, in addition to the above-described support members, the vehicle body frame extending in the vehicle width direction toward the vehicle body inner side.

In the above-described embodiment, the helmet HL stored in the helmet storage compartment 100 is an open face helmet. However, the helmet HL stored in the helmet storage compartment 100 may be a full face helmet.

In the above-described embodiment, the engine unit 60 supports the rear wheel 90 in a rotatable manner. However, instead of the engine unit 60, a rear arm may be used to rotatably support the rear wheel 90.

### Industrial Applicability

As described above, the straddle-type vehicle according to the invention is favorably used in a straddle-type vehicle like a scooter motorcycle because vehicle width, and in particular vehicle width in the vicinity of a seat, can be made narrower while ensuring provision of an adequate helmet storage compartment.

## Claims

1. Straddle-type vehicle comprising a vehicle body frame (30) that forms a frame of a vehicle body (10A) and a helmet storage compartment (100,101,102) capable of storing a helmet (HL), wherein a first protrusion (121,121a,121b,121c) that protrudes upwards in the straddle-type vehicle is provided in a bottom surface (110,110a,110b) of the helmet storage compartment (100,101,102) so as to form a first recess (123,123a, 123b, 123c) that opens downwards in the straddle-type vehicle, and at least a portion (32r, 32ar, 33ar) of the vehicle body frame (30) is disposed inside of the first recess (123,123a,123b,123c) from below the helmet storage compartment (100,101,102), and the first protrusion (121,121a,121b,121c) is adapted to be positioned between opposing side end sections (B1, B2) of the helmet (HL) when the helmet (HL) is stored in the helmet storage compartment (100,101,102), wherein a vehicle body center line (CL) is positioned between opposing side end sections (B1, B2) of the helmet (HL) when the helmet (HL) is stored in the helmet storage compartment (100,101,102), **characterized in that** said portion of the vehicle body frame (30) is an offset member (32r, 32ar, 33ar) that is provided at a position that is offset from the vehicle body center line (CL) of the straddle-type vehicle in the vehicle width direction, and the offset member (32r,32ar) is inserted into the first recess (123,123a,123b,123c) from below the helmet storage compartment (100,101,102).

2. Straddle-type vehicle according to claim 1, **characterized in that** the helmet storage compartment (100,101,102) is provided above a vehicle wheel (90) of the straddle-type vehicle.

3. Straddle-type vehicle according claim 2, **characterized in that** a second protrusion (122) that protrudes upwards in the straddle-type vehicle is formed in the bottom surface (110) of the helmet storage compartment (100) at a position that faces the vehicle wheel (90), the second protrusion (122) being provided such that a second recess (124) is formed that opens downwards in the straddle-type vehicle.

4. Straddle-type vehicle according to claim 2 or 3, **characterized by:**
a vehicle wheel support member (60a) that rotatably supports the vehicle wheel (90), and
a shock absorption mechanism (80), linked to the vehicle wheel support member (60a) and the offset member (32r,32ar), that absorbs shocks received by the vehicle wheel (90), wherein the shock absorption mechanism (80) is connected to a side section (32out) of the offset member (32r,32ar) at the outside in vehicle width direction.

5. Straddle-type vehicle according to one of claims 2 or 3, **characterized by:**
a seat (40) on which a rider can sit,
an engine unit (60) that is configured to generate driving force that is transmitted to the vehicle wheel (90), and
a fuel tank (70) that is configured to store fuel that is supplied to the engine unit (60), wherein the fuel tank (70) is provided beneath the seat (40), and the helmet storage compartment (100,101,102) is positioned to the rear of the fuel tank (70).

6. Straddle-type vehicle according to claim 5, **characterized in that** the helmet storage compartment (100,101,102) is provided further to the front than a wheel axle (90a) of the vehicle wheel (90).

7. Straddle-type vehicle according to claim 5 or 6, **characterized by** a suspension member (36) that suspends the engine unit (60), wherein the suspension member (36) is provided beneath the fuel tank (70).

8. Straddle-type vehicle according to one of claims 5 to 7, **characterized by** a shock absorption mechanism (80), extending upwards from a rear end section of the engine unit (60), that absorbs shocks received by the vehicle wheel (90), wherein the helmet storage compartment (100,101,102) is provided further to the front than the shock absorption mechanism (80).

9. Straddle-type vehicle according to one of claims 5 to 8, **characterized in that** the fuel tank (70) has a seat support member (71,72) that turnably supports the seat (40).

10. Straddle-type vehicle according to claim 9, **characterized in that** the seat support member (71,72) has a turning shaft (72) that extends in vehicle width direction, and that supports a front section (40a) of the seat (40).

11. Straddle-type vehicle according to one of the claims 1 to 10, **characterized in that** the helmet storage compartment (100,101,102) has a front end section (100a) and a rear end section (100b), and the front end section (100a) and the rear end section (100b) are supported by the vehicle body (10A).

12. Straddle-type vehicle according to claim 11, **characterized in that** the helmet storage compartment (100,101,102) is supported by the vehicle body frame (30).

13. Straddle-type vehicle according to claim 11 or 12, **characterized in that** the helmet storage compartment (100,101,102) is supported by the vehicle body frame (30) via a support member (34,39) that extends in vehicle width direction from the vehicle body frame (30) toward a vehicle body inner side.

## Patentansprüche

1. Ein Spreiz-Sitz-Typ-Fahrzeug, das umfasst einen Fahrzeug-Körper-Rahmen (30), der einen Rahmen eines Fahrzeug-Körpers (10A) bildet, und ein Helm-Lager-Fach (100, 101, 102), das in der Lage ist, einen Helm (HL) zu lagern, wobei ein erster Vorsprung (121, 121a, 121b, 121c), der in dem Spreiz-Sitz-Typ-Fahrzeug nach oben vorsteht, an einer Boden-Fläche (110, 110a, 110b) des Helm-Lager-Fachs (100, 101, 102) vorgesehen ist, so dass eine erste Ausnehmung (123, 123a, 123b, 123c), die nach unten öffnet, in dem Spreiz-Sitz-Typ-Fahrzeug ausgebildet ist, und zumindest ein Abschnitt (32r, 32ar, 33ar) des Fahrzeug-Körper-Rahmens (30) ist innerhalb der ersten Ausnehmung (123, 123a, 123b, 123c) von unten von dem Helm-Lager-Fach (100, 101, 102) positioniert, und der erste Vorsprung (121, 121a, 121b, 121c) ist angepasst, um zwischen gegenüberliegenden Seiten-End-Abschnitten (B1, B2) des Helms (HL) positioniert zu werden, wenn der Helm (HL) in dem Helm-Lager-Fach (100, 101, 102) gelagert ist, wobei eine Fahrzeug-Körper-Mittel-Linie (CL) zwischen gegenüberliegenden Seiten-End-Abschnitten (B1, B2) des Helms (HL) positioniert ist, wenn der Helm (HL) in dem Helm-Lager-Fach (100, 101, 102) gelagert ist, **dadurch gekennzeichnet, dass** dieser Abschnitt des Fahrzeug-Körper-Rahmens (30) ein versetztes Element (32r, 32ar, 33ar) ist, das an einer Position vorgesehen ist, die versetzt von der Fahrzeug-Körper-Mittel-Linie (CL) des Spreiz-Sitz-Typ-Fahrzeugs in der Fahrzeug-Breiten-Richtung ist, und das versetzte Element (32r, 32ar) ist in die erste Ausnehmung (123, 123a, 123b, 123c) von unten von dem Helm-Lager-Fach (100, 101, 102) eingesetzt.

2. Spreiz-Sitz-Typ-Fahrzeug gemäß Anspruch 1, **dadurch gekennzeichnet, dass** das Helm-Lager-Fach (100, 101, 102) oberhalb eines Fahrzeug-Rades (90) des Spreiz-Sitz-Typ-Fahrzeugs vorgesehen ist.

3. Spreiz-Sitz-Typ-Fahrzeug gemäß Anspruch 2, **dadurch gekennzeichnet, dass** ein zweiter Vorsprung (122), der nach oben vorspringt, in dem Spreiz-Sitz-Typ-Fahrzeug in der Boden-Fläche (101) des Helm-Lager-Fachs (100) an einer Position ausgebildet ist, die dem Fahrzeug-Rad (90) zugewandt ist, der zweite Vorsprung (122) ist vorgesehen, so dass eine zweite Ausnehmung (124), die nach unten in dem Spreiz-Sitz-Typ-Fahrzeug öffnet, ausgebildet ist.

4. Spreiz-Sitz-Typ-Fahrzeug gemäß Anspruch 2 oder 3, **gekennzeichnet durch:**
ein Fahrzeug-Rad-Lager-Element (60a), welches das Fahrzeug-Rad (90) drehbar lagert, und einen Stoß-Dämpf-Mechanismus (80), der mit dem Fahrzeug-Rad-Lager-Element (60a) und dem versetzten Element (32r, 32ar) verbunden, der Stöße,
aufgenommen durch das Fahrzeug-Rad (90) absorbiert, wobei der Stoß-Dämpf-Mechanismus (80) mit einem Seiten-Abschnitt (32out) des versetzten Elements (32r, 32ar) an der Außen-Seite in der Fahrzeug-Breiten-Richtung verbunden ist.

5. Spreiz-Sitz-Typ-Fahrzeug gemäß einem der Ansprüche 2 oder 3, **gekennzeichnet durch:**
einen Sitz (40), auf dem ein Fahrer sitzen kann,
eine Motor-Einheit (60), die konfiguriert, um Antriebs-Kraft zu erzeugen, die zu dem Fahrzeug-Rad (90) übertragen ist, und
einen Kraftstoff-Tank (70), der konfiguriert ist, um Kraftstoff, der zu der Motor-Einheit (60) zugeführt ist, zu lagern,
wobei der Kraftstoff-Tank (90) in der Nähe des Sitzes (40) vorgesehen ist, und das Helm-Lager-Fach (100, 101, 102) ist hinter dem Kraftstoff-Tank (70) positioniert.

6. Spreiz-Sitz-Typ-Fahrzeug gemäß Anspruch 5, **dadurch gekennzeichnet, dass** das Helm-Lager-Fach (100, 101, 102) weiter vorne als eine Rad-Achse (90a) des Fahrzeug-Rads (90) vorgesehen ist.

7. Spreiz-Sitz-Typ-Fahrzeug gemäß Anspruch 5 oder 6, **gekennzeichnet durch** ein Aufhängungs-Element (36), das die Motor-Einheit (60) aufhängt, wobei das Aufhängungs-Element (36) in der Nähe des Kraftstoff-Tanks (70) vorgesehen ist.

8. Spreiz-Sitz-Typ-Fahrzeug gemäß einem der Ansprüche 5 bis 7, **gekennzeichnet durch** einen Stoß-Dämpf-Mechanismus (80), der sich nach oben von einem hinteren End-Abschnitt der Motor-Einheit (60) erstreckt, der Stöße, aufgenommen durch das Fahrzeug-Rad (90), absorbiert, wobei das Helm-Lager-Fach (100, 101, 102) weiter vorne als der Stoß-Dämpf-Mechanismus (80) vorgesehen ist.

9. Spreiz-Sitz-Typ-Fahrzeug gemäß einem der Ansprüche 5 bis 8, **dadurch gekennzeichnet, dass** der Kraftstoff-Tank (70) ein Sitz-Lager-Element (71, 72) hat, das den Sitz (40) schwenkbar lagert.

10. Spreiz-Sitz-Typ-Fahrzeug gemäß Anspruch 9, **dadurch gekennzeichnet, dass** das Sitz-Lager-Element (71, 72) eine Schwenk-Welle (72) hat, die sich in der Fahrzeug-Breiten-Richtung erstreckt, und die einen Vorder-Abschnitt (40a) des Sitzes (40) lagert.

11. Spreiz-Sitz-Typ-Fahrzeug gemäß einem der Ansprüche 1 bis 10, **dadurch gekennzeichnet, dass** das Helm-Lager-Fach (100, 101, 102) einen vorderen End-Abschnitt (100a) und einen hinteren End-Abschnitt (100b) hat, und der vordere End-Abschnitt (100a) und der hintere End-Abschnitt (100b) sind durch den Fahrzeug-Körper (10A) gelagert.

12. Spreiz-Sitz-Typ-Fahrzeug gemäß Anspruch 11, **dadurch gekennzeichnet, dass** das Helm-Lager-Fach (100, 101, 102) durch den Fahrzeug-Körper-Rahmen (30) gelagert ist.

13. Spreiz-Sitz-Typ-Fahrzeug gemäß Anspruch 11 oder 12, **dadurch gekennzeichnet, dass** das Helm-Lager-Fach (100, 101, 102) durch den Fahrzeug-Körper-Rahmen (30) über ein Lager-Element (34, 39) gelagert ist, das sich in der Fahrzeug-Breiten-Richtung von dem Fahrzeug-Körper-Rahmen (30) zu einer Fahrzeug-Körper-InnenSeite erstreckt.

## Revendications

1. Véhicule de type à enfourcher comprenant un châssis de corps de véhicule (30) qui forme un châssis d'un corps de véhicule (10A) et un compartiment de stockage de casque (100, 101, 102) capable de stocker un casque (HL), dans lequel une première protubérance (121, 121a, 121b, 121c) qui ressort vers le haut dans le véhicule de type à enfourcher est pourvue dans une surface inférieure (110, 110a, 110b) du compartiment de stockage de casque (100, 101, 102) de manière à former un premier évidement (123, 123a, 123b, 123c) qui s'ouvre vers le bas dans le véhicule de type à enfourcher, et au moins une portion (32r, 32ar, 33ar) du châssis de corps de véhicule (30) est disposée à l'intérieur du premier évidement (123, 123a, 123b, 123c) depuis le dessous du compartiment de stockage de casque (100, 101, 102), et la première protubérance (121, 121a, 121b, 121c) est adaptée pour être positionnée entre des sections d'extrémité latérale opposées (B1, B2) du casque (HL) quand le casque (HL) est stocké dans le compartiment de stockage de casque (100, 101, 102), dans lequel la ligne centrale du corps de véhicule (CL) est positionnée entre des sections d'extrémité latérale opposées (B1, B2) du casque (HL) quand le casque (HL) est stocké dans le compartiment de stockage de casque (100, 101, 102), **caractérisé en ce que** ladite portion de châssis de corps de véhicule (30) est un élément décalé (32r, 32ar, 33ar) qui est pourvu à une position qui est décalée par rapport à la ligne centrale du corps de véhicule (CL) du véhicule de type à enfourcher en direction de la largeur du véhicule, et l'élément décalé (32r, 32ar) est inséré dans le premier évidement (123, 123a, 123b, 123c) depuis le dessous du compartiment de stockage de casque (100, 101, 102).

2. Véhicule de type à enfourcher selon la revendication 1, **caractérisé en ce que** le compartiment de stockage de casque (100, 101, 102) est pourvu au-dessus d'une roue du véhicule (90) du véhicule de type à enfourcher.

3. Véhicule de type à enfourcher selon la revendication 2, **caractérisé en ce qu'**une deuxième protubérance (122) qui ressort vers le haut dans le véhicule de type à enfourcher est formée dans la surface inférieure (110) du compartiment de stockage de casque (100) à une position qui fait face à la roue de véhicule (90), la deuxième protubérance (122) étant pourvue de telle sorte qu'un deuxième renfoncement (124) est formé, qui s'ouvre vers le bas dans le véhicule de type à enfourcher.

4. Véhicule de type à enfourcher selon la revendication 2 ou 3, **caractérisé par :**
un élément de support de roue de véhicule (60a) qui supporte la roue de véhicule (90) de manière rotative, et
un mécanisme d'absorption des chocs (80), relié à l'élément de support de roue de véhicule (60a) et à l'élément décalé (32r, 32ar), qui absorbe les chocs reçus par la roue de véhicule (90), dans lequel le mécanisme d'absorption des chocs (80) est connecté à une section latérale (32out) de l'élément décalé (32r, 32ar) vers l'extérieur en direction de la largeur du véhicule.

5. Véhicule de type à enfourcher selon la revendication 2 ou 3, **caractérisé par** :
un siège (40) sur lequel peut s'asseoir un conducteur,
une unité de moteur (60) qui est configurée pour générer une force d'entraînement transmise à la roue de véhicule (90), et
un réservoir de carburant (70) qui est configuré pour stocker du carburant fourni à l'unité de moteur (60), dans lequel le réservoir de carburant (70) est pourvu sous le siège (40) et le compartiment de stockage de casque (100, 101, 102) est positionné derrière le réservoir de carburant (70) .

6. Véhicule de type à enfourcher selon la revendication 5, **caractérisé en ce que** le compartiment de stockage de casque (100, 101, 102) est pourvu plus à l'avant que l'essieu (90a) de la roue de véhicule (90).

7. Véhicule de type à enfourcher selon la revendication 5 ou 6, **caractérisé par** un élément de suspension (36) auquel est suspendue l'unité de moteur (60), dans lequel l'élément de suspension (36) est pourvu sous le réservoir de carburant (70).

8. Véhicule de type à enfourcher selon l'une des revendications 5 à 7, **caractérisé par** un mécanisme d'absorption des chocs (80) qui s'étend vers le haut depuis une section d'extrémité arrière de l'unité de moteur (60) et absorbe les chocs reçus par la roue de véhicule (90), dans lequel le compartiment de stockage de casque (100, 101, 102) est pourvu plus en avant que le mécanisme d'absorption des chocs (80).

9. Véhicule de type à enfourcher selon l'une des revendications 5 à 8, **caractérisé en ce que** le réservoir de carburant (70) comporte un élément de support de siège (71, 72) qui supporte le siège de manière tournante (40).

10. Véhicule de type à enfourcher selon la revendication 9, **caractérisé en ce que** l'élément de support de siège (71, 72) comporte un axe de rotation (72) qui s'étend en direction de la largeur du véhicule et supporte une section avant (40a) du siège (40).

11. Véhicule de type à enfourcher selon l'une des revendications 1 à 10, **caractérisé en ce que** le compartiment de stockage de casque (100, 101, 102) comporte une section d'extrémité avant (100a) et une section d'extrémité arrière (100b), et la section d'extrémité avant (100a) et la section d'extrémité arrière (100b) sont supportées par le corps de véhicule (10A).

12. Véhicule de type à enfourcher selon la revendication 11, **caractérisé en ce que** le compartiment de stockage de casque (100, 101, 102) est supporté par le châssis de corps de véhicule (30).

13. Véhicule de type à enfourcher selon la revendication 11 ou 12, **caractérisé en ce que** le compartiment de stockage de casque (100, 101, 102) est supporté par le châssis de corps de véhicule (30) via un élément de support (34, 39) qui s'étend en direction de la largeur du véhicule depuis le châssis de corps de véhicule (30) vers un côté interne du corps de véhicule.
